(19) Europäisches Patentamt

European Patent Office

Office européen des brevets

(11) **EP 4 529 359 A1**

(12) **EUROPEAN PATENT APPLICATION**
published in accordance with Art. 153(4) EPC

(43) Date of publication:
26.03.2025 Bulletin 2025/13

(21) Application number: 23807442.1

(22) Date of filing: 02.05.2023

(51) International Patent Classification (IPC):
*H05B 47/165* (2020.01)     *B60Q 1/28* (2006.01)
*B60Q 1/50* (2006.01)       *H05B 45/10* (2020.01)
*H05B 45/325* (2020.01)     *H05B 47/105* (2020.01)

(52) Cooperative Patent Classification (CPC):
B60Q 1/28; B60Q 1/50; H05B 45/10; H05B 45/325;
H05B 47/105; H05B 47/165

(86) International application number:
**PCT/JP2023/017120**

(87) International publication number:
**WO 2023/223835 (23.11.2023 Gazette 2023/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 17.05.2022 JP 2022080878

(71) Applicant: **Koito Manufacturing Co., Ltd.
Shinagawa-ku, Tokyo 141-0001 (JP)**

(72) Inventors:
• **NAKAOKA, Hayato**
  **Shizuoka-shi, Shizuoka 424-8764 (JP)**
• **AKINO, Kimitoshi**
  **Shizuoka-shi, Shizuoka 424-8764 (JP)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(54) **LIGHTING DEVICE AND VEHICLE LAMP**

(57)     Provided is a lighting device capable of suppressing deviation in the timing of turning on a plurality of light sources. The lighting device includes a first lighting circuit that turns on a first light source when a state of a first signal satisfies a first condition and changes a brightness of the first light source according to the state of the first signal, a second lighting circuit that turns on a second light source when a state of a second signal satisfies a second condition different from the first condition and changes a brightness of the second light source according to the state of the second signal, and a first output circuit that outputs, to the first lighting circuit, the first signal whose state changes from a first initial state satisfying the first condition such that the first light source is turned on and is gradually brightened, and outputs, to the second lighting circuit, the second signal whose state changes from a second initial state satisfying the second condition such that the second light source is turned on and is gradually brightened, based on an instruction signal.

*FIG. 3*

## Description

TECHNICAL FIELD

The present invention relates to a lighting device and a vehicle lamp.

BACKGROUND ART

A general vehicle includes a headlamp provided at the front of the vehicle and a lighting circuit that turns on the headlamp (for example, Patent Literature 1).

CITATION LIST

PATENT LITERATURE

Patent Literature 1: JP-A-2020-55425

SUMMARY OF INVENTION

PROBLEMS TO BE SOLVED BY INVENTION

Incidentally, an accessory lamp may be provided at the front of the vehicle in addition to the headlamp. In this case, the accessory lamp is turned on by a circuit different from the lighting circuit for the headlamp.

In general, a lighting circuit for a headlamp and a lighting circuit for an accessory lamp are different from each other in an operating condition. For this reason, for example, even when a control circuit controls operation of the plurality of lighting circuits such that the headlamp and the accessory lamp are simultaneously turned on and are gradually brightened, there may be great deviation in the timing of turning on each of the headlamp and the accessory lamp.

The present invention has been made in view of the above-described conventional problems, and an object of the present invention is to provide a lighting device capable of suppressing deviation in the timing of turning on a plurality of light sources.

SOLUTION TO PROBLEMS

One aspect of the present invention is directed to a lighting device including a first lighting circuit that turns on a first light source when a state of a first signal satisfies a first condition and changes a brightness of the first light source according to the state of the first signal, a second lighting circuit that turns on a second light source when a state of a second signal satisfies a second condition different from the first condition and changes a brightness of the second light source according to the state of the second signal, and a first output circuit that outputs, to the first lighting circuit, the first signal whose state changes from a first initial state satisfying the first condition such that the first light source is turned on and is gradually brightened, and outputs, to the second lighting circuit, the second signal whose state changes from a second initial state satisfying the second condition such that the second light source is turned on and is gradually brightened, based on an instruction signal.

One aspect of the present invention is directed to a lighting device for turning on a first light source and a second light source attached to a vehicle, the lighting device including a first lighting circuit that turns on the first light source when a state of a first signal satisfies a first condition and changes a brightness of the first light source according to the state of the first signal, a second lighting circuit that turns on the second light source when a state of a second signal satisfies a second condition different from the first condition and changes a brightness of the second light source according to the state of the second signal, and a first output circuit that outputs, to the first lighting circuit, the first signal whose state changes from a first initial state satisfying the first condition such that the first light source is turned on and is gradually brightened, and outputs, to the second lighting circuit, the second signal whose state changes from a second initial state satisfying the second condition such that the second light source is turned on and is gradually brightened, when a door of the vehicle is unlocked.

EFFECTS OF INVENTION

According to the present invention, it is possible to provide the lighting device capable of suppressing the deviation in the timing of turning on a plurality of light sources.

BRIEF DESCRIPTION OF DRAWINGS

Fig. 1 is a view illustrating the outline of the front of a vehicle C;
Fig. 2 is a diagram illustrating the outline of a vehicle lamp 100;
Fig. 3 is a diagram illustrating one example of the configuration of a lighting device 210;
Fig. 4 is a diagram illustrating one example of part of a microcomputer 230 and IF circuits 231, 232;
Fig. 5 is a chart for describing a signal S1;
Fig. 6 is a flowchart illustrating one example of processing executed by a control device 110; and
Fig. 7 is a graph for describing one example of a change in signals S1 to S3.

DESCRIPTION OF EMBODIMENTS

At least the following matters will be apparent from description of the present specification and illustration of the accompanying drawings.

===== Present Embodiment =====

<<Vehicle C>>

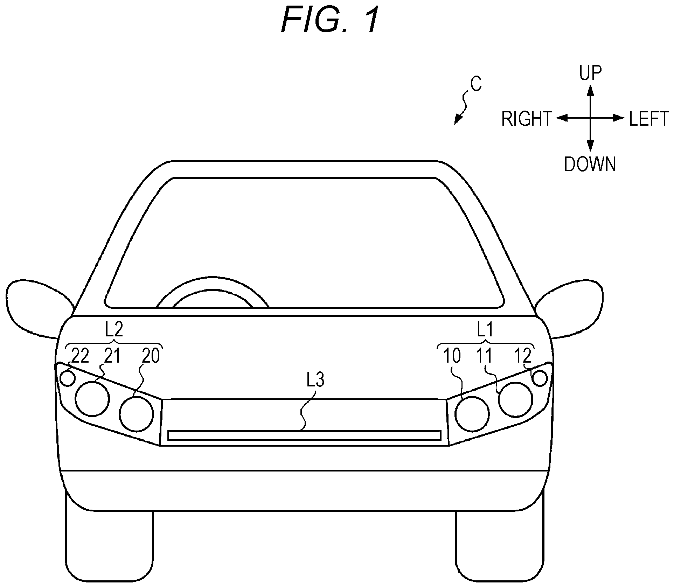

Fig. 1 is a view illustrating the outline of the front of a vehicle C. Note that in Fig. 1, the vertical direction in the plane of paper will be defined as an up-down direction and the horizontal direction in the plane of paper will be defined as a left-right direction. In addition, the upper side in the plane of paper will be defined as "up" in the up-down direction and the right side in the plane of paper will be defined as "left" in the left-right direction. Further, the near side in the plane of paper will be referred to as "front" in a front-rear direction. Here, headlamps L1, L2 and an accessory lamp L3 are provided at the front of the vehicle C.

The headlamp L1 is a lamp attached to the front left of the vehicle C, and includes a low beam lamp 10, a high beam lamp 11, and a lamp 12 (i.e., clearance lamp) for indicating the width of the vehicle C.

The headlamp L2 is a lamp attached to the front right of the vehicle C, and includes a low beam lamp 20, a high beam lamp 21, and a lamp 22 (i.e., clearance lamp) for indicating the width of the vehicle C. Note that the lamps 20, 21 are similar to the lamps 10, 11 and the lamp 22 is similar to the lamp 12.

The accessory lamp L3 is a lamp attached to the front center of the vehicle C to indicate the width of the vehicle C together with the lamps 12, 22. Although details will be described later, the accessory lamp L3 is turned on and is gradually brightened, for example, when a door (not illustrated) of the vehicle C is unlocked.

<<Vehicle lamp 100>>

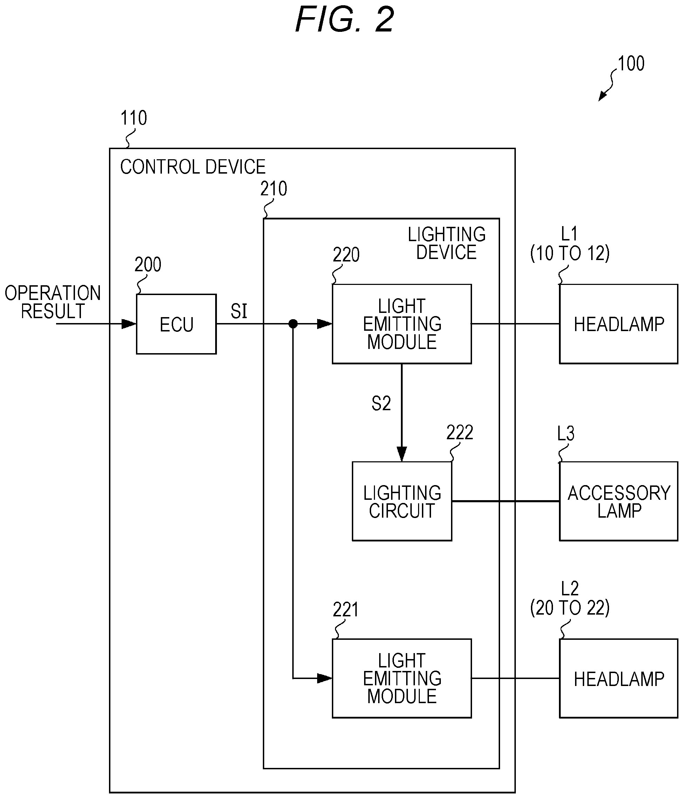

Fig. 2 is a diagram illustrating one example of the configuration of a vehicle lamp 100 provided in the vehicle C. The vehicle lamp 100 includes the headlamps L1, L2, the accessory lamp L3, and a control device 110.

The control device 110 is a device that controls lighting of the headlamps L1, L2 and the accessory lamp L3, and includes an electronic control unit (ECU) 200 and a lighting device 210.

The ECU 200 outputs an instruction signal SI corresponding to a user's operation result to the lighting device 210. Here, the "operation" is an operation for turning on at least one of the headlamps L1, L2 and the accessory lamp L3. The "operation" is not limited to an operation of a user operating part of the vehicle C (for example, an indicator for turning on or off the headlamp), and includes, for example, a keyless operation of the vehicle C and an operation of bringing a smart key close to the vehicle C.

Note that the "keyless" is, for example, a device capable of remotely unlocking and locking the door of the vehicle C. In addition, the "smart key" is, for example, a device that instructs the vehicle C to unlock the door of the vehicle C when the smart key is within a predetermined area from the vehicle C. Note that hereinafter, devices such as the keyless and the smart key may be simply referred to as "keyless etc."

The lighting device 210 is a device that turns on or off the headlamps L1, L2 and the accessory lamp L3 based on the instruction signal SI, and includes light emitting modules 220, 221 and a lighting circuit 222.

The light emitting module 220 turns on or off the headlamp L1 based on the instruction signal SI, and the light emitting module 221 turns on or off the headlamp L2 based on the instruction signal SI. For example, when the ECU 200 outputs the instruction signal SI for turning on the low beam lamps 10, 20 of the headlamps L1, L2, the light emitting module 220 turns on the lamp 10, and the light emitting module 221 turns on the lamp 20.

When the ECU 200 outputs the instruction signal SI for turning off the lamps 10, 20 with the lamps 10, 20 ON, the light emitting module 220 turns off the lamp 10, and the light emitting module 221 turns off the lamp 20.

Although details will be described later, the light emitting module 220 outputs, to the lighting circuit 222, a signal S2 (described later) for turning on the accessory lamp L3 based on the instruction signal S1 for turning on the accessory lamp L3.

The lighting circuit 222 turns on the accessory lamp L3 based on the signal S2. Note that "lighting/turning on" includes not only a case where the brightness of the lamp is immediately changed to a predetermined brightness, but also a case where the brightness of the lamp is gradually changed, for example. Further, a gradual increase in the brightness of the lamp (i.e., the light amount of the lamp is gradually increased) will be referred to as "gradual lighting/turning on."

Incidentally, the lighting device 210 of the present embodiment gradually turns on the clearance lamps 12, 22 of the headlamps L1, L2 and the accessory lamp L3 when the keyless etc. are operated to unlock the door of the vehicle C. Thus, a configuration of gradually turning on the lamps 12, 22 and the accessory lamp L3 in the lighting device 210 will be mainly described below.

<<Example of configuration of lighting device 210 implementing gradual lighting>>

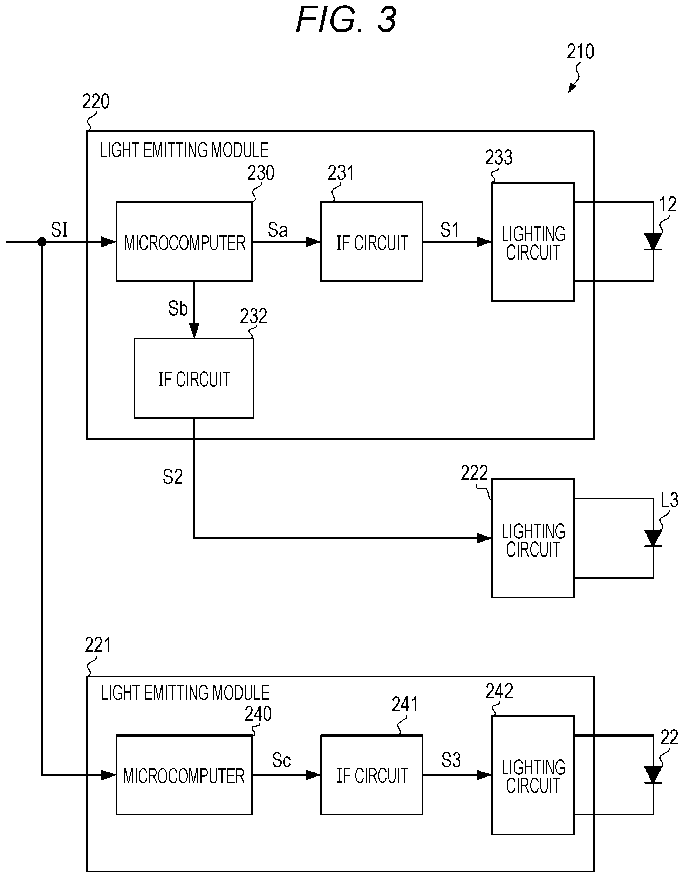

Fig. 3 is a diagram illustrating one example of the configurations of the light emitting modules 220, 221 capable of gradually turning on the lamps 12, 22 and the accessory lamp L3. Note that here, a configuration of turning on the lamps 10, 11 of the headlamp L1 and the lamps 20, 21 of the headlamp L2 in the light emitting modules 220, 221 is omitted for the sake of convenience.

Each of the lamps 12, 22 and the accessory lamp L3 includes one or more light emitting elements. Note that hereinafter, the lamps 12, 22 and the accessory lamp L3 will be referred to as "three lamps" as necessary.

**<<Light emitting module 220>>**

The light emitting module 220 turns on the lamp 12 based on the instruction signal SI, and outputs the signal S2 (described later) for turning on the accessory lamp L3 to the lighting circuit 222. The light emitting module 220 includes a microcomputer 230, interface (IF) circuits 231, 232, and a lighting circuit 233.

**<Microcomputer 230>**

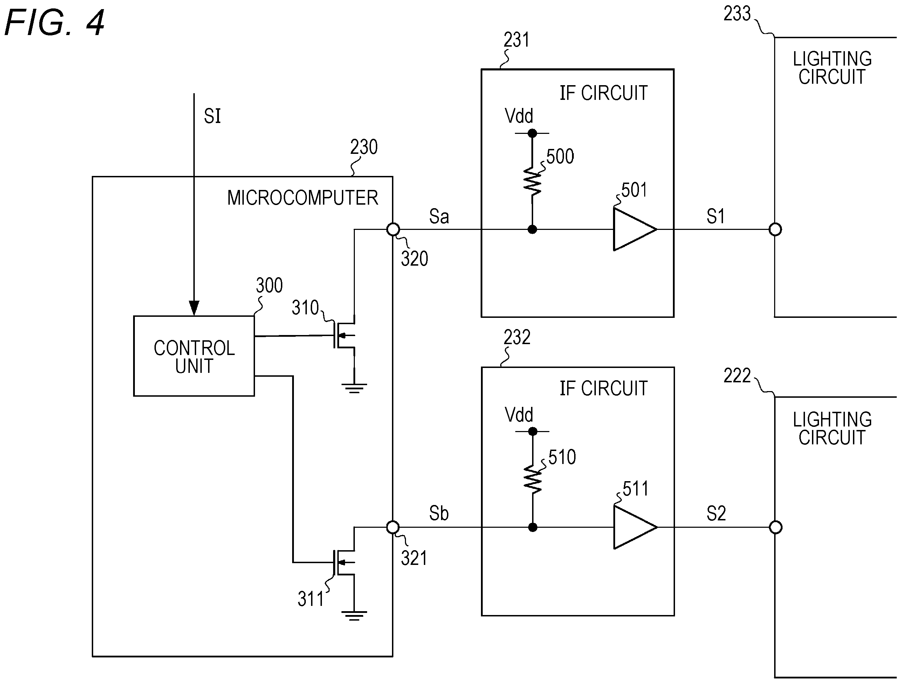

Fig. 4 is a diagram illustrating one example of a partial configuration of the microcomputer 230 and the configuration of the IF circuits 231, 232. The microcomputer 230 generates signals Sa, Sb, which are pulse width modulation (PWM) signals, based on the instruction signal SI for gradually turning on the three lamps.
The microcomputer 230 includes a control unit 300 and transistors 310, 311. The control unit 300 is a functional block implemented by the microcomputer 230 when an arithmetic circuit (not illustrated) of the microcomputer 230 executes a program stored in a memory (not illustrated). The control unit 300 controls ON and OFF of the transistors 310, 311 based on the instruction signal SI.
The transistor 310 is an MOS transistor forming a so-called open drain circuit, and a drain terminal of the transistor 310 is connected to a terminal 320 of the microcomputer 230. The transistor 311 is also an MOS transistor forming an open drain circuit as in the transistor 310. A drain terminal of the transistor 311 is connected to a terminal 321 of the microcomputer 230.

**<IF circuit 231>**

The IF circuit 231 is a circuit that outputs the signal S1 having the same logic level as the logic level of the signal Sa to the lighting circuit 233, and includes a resistor 500 and a buffer 501. A power supply voltage Vdd is applied to one end of the resistor 500, and the other end is connected to the terminal 320. Thus, the resistor 500 functions as a so-called pull-up resistor.
Thus, in the present embodiment, when the control unit 300 turns on the transistor 310, the signal Sa generated in the terminal 320 changes to a low level (hereinafter, L-level), and when the control unit 300 turns off the transistor M1, the signal Sa changes to a high level (hereinafter, H-level).
The buffer 501 outputs, to the lighting circuit 233, the signal S1 having the same logic level as that of the input signal Sa. Specifically, the buffer 501 outputs the H-level signal S1 when the H-level signal Sa is input thereto, and outputs the L-level signal S1 when the L-level signal Sa is input thereto.

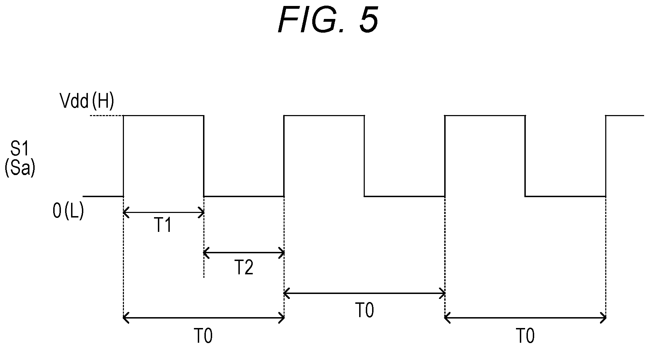

Fig. 5 is a chart for describing one example of the signal S1. The control unit 300 of the present embodiment turns on and off the transistor 310 to generate the pulse-width modulated signal Sa, S1. Here, the cycle of the signal S1, which is the PWM signal, is T0, and a period in which the signal S1 is at the H-level in each cycle T0 is T1, and a period in which the signal S1 is at the L-level in each cycle T0 is T2. In this case, a "duty ratio D (so-called on-duty ratio)" is expressed by Equation (1) below:

$$D=T1/(T1+T2)=T1/T0 \qquad (1)$$

**<IF circuit 232>**

The IF circuit 232 is a circuit that outputs the signal S2 having the same logic level as the logic level of the signal Sb to the lighting circuit 222, and includes a resistor 510 and a buffer 511. The resistor 510 and buffer 511 of the IF circuit 232 are similar to the resistor 500 and buffer 501 of the IF circuit 231, and for this reason, here, detailed description thereof will be omitted.

**<Lighting circuit 233>**

The lighting circuit 233 performs PWM lighting (i.e., gradual lighting) of the lamp 12 in synchronization with the input signal S1. Specifically, the lighting circuit 233 supplies the lamp 12 with current which increases as the duty ratio D of the signal S1 increases.
Incidentally, the lighting circuit 233 has a dead band in which the current cannot be supplied to the lamp 12 when the duty ratio D of the signal S1 is less than a predetermined value Da (for example, 3%). That is, when the duty ratio D of the signal S1 input to the lighting circuit 233 is less than the predetermined value Da, the lighting circuit 233 cannot turn on the lamp 12.
On the other hand, when the duty ratio D of the signal S1 reaches the predetermined value Da or more, the lighting circuit 233 can supply the current to the lamp 12 to turn on the lamp 12. Then, the lighting circuit 233 increases the brightness of the lamp 12 according to the increase in the duty ratio D. Although details will be described later, in the present embodiment, the microcomputer 230 needs to change the duty ratio D of the signal Sa not from 0% but from the predetermined value Da (for example, 3%) when turning on the lamp 12.
Note that in the present embodiment, the lamp 12 is equivalent to a "first light source," the signal S1 is equivalent to a "first signal (or a first PWM signal)," and the lighting circuit 233 is equivalent to a "first lighting circuit." In addition, the duty ratio D of the signal S1 is equivalent to a "first duty ratio," and the duty ratio D of the signal S1 reaching the predetermined value Da or more is equivalent to "the state of the first signal satisfying a first condition for turning on the lamp 12 (first light source)."

**<<Light emitting module 221>>**

The light emitting module 221 of Fig. 3 is a module that turns on the lamp 22 based on the instruction signal SI as in the light emitting module 220, and includes a microcomputer 240, an IF circuit 241, and a lighting circuit 242. Here, although not illustrated, the microcomputer 240 includes the control unit 300 and the transistor 310 in the microcomputer 230 of Fig. 4. The IF circuit 241 is similar to the IF circuit 231, and the lighting circuit 242 is similar to the lighting circuit 233.

Thus, here, although detailed description of the light emitting module 221 will be omitted, a signal Sc generated by the microcomputer 240 and a signal S3 from the IF circuit 241 are PWM signals similar to the signals Sa, S1. Note that the lighting circuit 242 also has a dead band in which the lamp 22 cannot be turned on when the duty ratio D of the signal S3 is less than a predetermined value Da (for example, 3%), as in the lighting circuit 233.

Thus, when the duty ratio D of the signal S3 reaches the predetermined value Da or more, the lighting circuit 242 can turn on the lamp 22 and increase the brightness of the lamp 22 according to the increase in the duty ratio D.

Note that here, the lamp 22 is equivalent to a "third light source," the signal S3 is equivalent to a "third signal," and the lighting circuit 242 is equivalent to a "third lighting circuit." In addition, the duty ratio D of the signal S3 reaching the predetermined value Da or more is equivalent to "the state of the third signal satisfying a third condition for turning on the lamp 22 (third light source)."

<<Lighting circuit 222>>

The lighting circuit 222 shown in Fig. 3 performs PWM lighting of the accessory lamp L3 in synchronization with the input signal S2. Specifically, the lighting circuit 222 supplies the accessory lamp L3 with current which increases as the duty ratio D of the signal S2 increases. Thus, the accessory lamp L3 is gradually turned on according to the increase in the duty ratio D.

Incidentally, the lighting circuit 222 has a dead band in which the accessory lamp L3 cannot be turned on when the duty ratio D of the signal S2 is less than a predetermined value Db (for example, 4%). Thus, when the duty ratio D of the signal S2 reaches the predetermined value Db or more, the lighting circuit 222 can turn on the accessory lamp L3 and increase the brightness of the accessory lamp L3 according to the increase in the duty ratio D.

Note that in the present embodiment, the accessory lamp L2 is equivalent to a "second light source," the signal S2 is equivalent to a "second signal (or a second PWM signal)," and the lighting circuit 222 is equivalent to a "second lighting circuit." In addition, the duty ratio D of the signal S2 is equivalent to a "second duty ratio," and the duty ratio D of the signal S2 reaching the predetermined value Db or more is equivalent to "the state of the second signal satisfying a second condition for turning on the accessory lamp L2 (second light source)."

Here, the condition (second condition) for turning on the accessory lamp L3 by the lighting circuit 222 is different from the condition (first condition) for turning on the lamp 12 by the lighting circuit 233. This is because, for example, circuits and elements forming each of the lighting circuits 222, 233 are different and light emitting elements forming each lamp are different.

In the present embodiment, the microcomputer 230 and the IF circuits 231, 232 are equivalent to a "first output circuit," and the microcomputer 240 and the IF circuit 241 are equivalent to a "second output circuit."

Note that in the light emitting module 220 of Fig. 3, the microcomputer 230 and the IF circuits 231, 232 are formed by separate circuits, but the present invention is not limited thereto. For example, the microcomputer 230 may include the IF circuits 231, 232. In this case, the microcomputer 230 is equivalent to the "first output circuit."

The microcomputer 240 may also include the IF circuit 241. In this case, the microcomputer 240 is equivalent to the "second output circuit."

=== Processing of control device 110 when door of vehicle C is unlocked ===

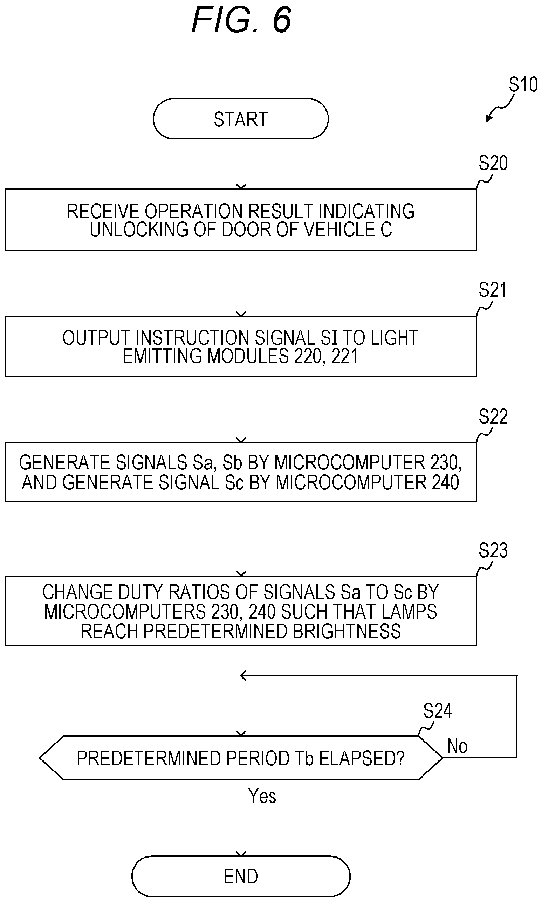

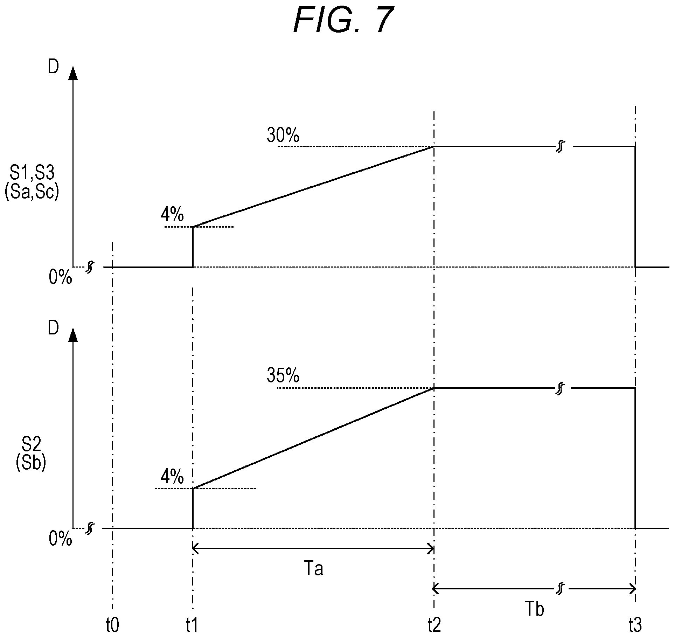

Fig. 6 is a flowchart illustrating one example of processing S10 executed by the control device 110 when the door of the vehicle C is unlocked. Fig. 7 is a graph illustrating one example of a change in the duty ratios of the signals S1 to S3 generated by the light emitting modules 220, 221.

Hereinafter, in the present embodiment, the above-described predetermined value Da is 3%, and the predetermined value Db is 4%. Thus, when the signal S1, S3 having a duty ratio D of 3% or more is input to the lighting circuit 233, 242, the lighting circuit 233, 242 turns on the lamp 12, 22. The lighting circuit 222 turns on the accessory lamp L3 when the signal S2 having a duty ratio D of 4% or more is input thereto.

First, for example, when a user operates the keyless etc. to unlock the door of the vehicle C at a time point t0 in Fig. 7, the ECU 200 in Fig. 2 receives an operation result indicating unlocking of the door (S20). The ECU 200 outputs, to the light emitting modules 220, 221, the instruction signal SI for gradually turning on the lamps 12, 22 and the accessory lamp L3 based on the operation result indicating unlocking of the door (S21).

As a result, the microcomputer 230 of the light emitting module 220 starts generating the signals Sa, Sb, and the microcomputer 240 of the light emitting module 221 starts generating the signal Sc (S22 and a time point t1 in Fig. 7). Here, in the processing S22, the microcomputer 230 sets an initial value D1 of the duty ratio D of the signal Sa to 4% (value of the predetermined value Da or more), and sets an initial value D2 of the duty ratio D of the signal Sb to 4% (value of the predetermined value Db or more).

The microcomputer 240 also sets an initial value D3 of the duty ratio D of the signal Sc to 4% (value of the predetermined value Da or more). As described above, the duty ratios D of the signals S1 to S3 are equal to the duty ratios D of the signals Sa to Sc. Thus, when the signals Sa to Sc are generated at the time point t1, the lighting circuits 233, 242 turn on the lamps 12, 22, and the lighting circuit 222 turns on the accessory lamp L3.

With this configuration, in the present embodiment, the lamps 12, 22 and the accessory lamp L3 provided at the front of the vehicle C are turned on at the time point t1, and therefore, it is possible to prevent deviation in the timing of turning on the three lamps. Note that here, each of the initial values D1 to D3 of the signals Sa to Sc is set to 4%, but the present invention is not limited thereto. In order to prevent the deviation in the lighting timing between the lamps 12, 22 and the accessory lamp L3, the initial values D1, D3 may be set to 3% (predetermined value Da) or more, and the initial value D2 may be set to 4% (predetermined value Db) or more.

For example, the initial value D1 of the signal Sa may be set to 3%, the initial value D2 of the signal Sb may be set to 4%, and the initial value D3 of the signal Sc may be set to 5%, which are different from each other. Note that the initial value D1 is equivalent to a "first initial value (or a first initial state)," and the initial value D2 is equivalent to a "second initial value (or a second initial state)." Further, the initial value D3 is equivalent to a "third initial state."

Thereafter, the microcomputers 230, 240 increase the duty ratios D of the signals Sa to Sc such that the brightnesses of the lamps 12, 22 and the accessory lamp L3 reach a predetermined brightness (hereinafter, referred to as a "brightness A0 (for example, 3,000 candelas)") at a time point t2 after a period Ta has elapsed from the time point t1 (S23).

Specifically, the microcomputer 230 increases the duty ratio D of the signal Sa to 30% and increases the duty ratio D of the signal Sb to 35% by the time point t2 (S23). As in the signal Sa of the microcomputer 230, the microcomputer 240 also increases the duty ratio D of the signal Sc to 30% by the time point t2.

As described above, the signals S1 to S3 change similarly to the respective signals Sa to Sc. As a result, the lamps 12, 22 and the accessory lamp L3 are turned on at the time point t1, and thereafter, PWM lighting (i.e., gradual lighting) thereof is performed in synchronization with the signals S1 to S3 such that the brightnesses of these lamps reach the predetermined brightness A0 at the time point t2.

Note that in the present embodiment, the lamps 12, 22 are similar to each other, and the lighting circuits 233, 242 are similar to each other. Thus, by similarly changing the duty ratios D of the signals S1, S3, the brightnesses of the lamps 12, 22 can be changed substantially equally.

On the other hand, the accessory lamp L3 is different from the lamps 12, 22, and the configuration of the lighting circuit 222 is also different from the configurations of the lighting circuits 233, 242. Note that the duty ratio D of the signal S2 is changed such that the brightness reaches the predetermined brightness A0 in the predetermined period Ta after the accessory lamp L3 has been turned on. Thus, in the present embodiment, the change in brightness of the accessory lamp L3 can be made substantially equal to the change in brightnesses of the lamps 12, 22.

With this configuration, in the present embodiment, the brightness of each of the lamps 12, 22 and the accessory lamp L3 arranged adjacent to the front of the vehicle C can be similarly changed.

The microcomputers 230, 240 determine, for example, whether or not the time has reached a time point t3 at which a predetermined period Tb has elapsed from the time point t2 at which the brightnesses of the three lamps have reached the predetermined brightness A0 (S24). Then, until a time point t3, the microcomputers 230, 240 continuously generate the signals Sa to Sc for setting the three lamps to have the predetermined brightness A0 (S24: No).

At the time point t3, the microcomputers 230, 240 set the duty ratios of the signals Sa to Sc to zero to turn off the three lamps (S24: Yes). As a result, the lamps 12, 22 and the accessory lamp L3 are turned off. As described above, in the present embodiment, even when the lighting circuits 233, 242 and the lighting circuit 222 different from each other in an operating condition are used, it is possible to gradually turn on the lamps to the predetermined brightness A0 while suppressing the deviation in the lighting timing between the three lamps.

Note that in the processing S24, the microcomputers 230, 240 generate the signals Sa to Sc such that the three lamps have the predetermined brightness A0 until the predetermined period Tb has elapsed, but the present invention is not limited thereto. For example, when the user operates part (for example, an indicator for turning on or off the headlamp or a button for starting an engine) of the vehicle C after the time point t2, the microcomputers 230, 240 execute so-called interruption processing and perform an operation based on the instruction signal SI from the ECU 200. As a result, the three lamps may be turned off before the time point t3.

=== Other embodiments ===

<Input voltage to lighting circuit>

In the present embodiment, the lighting circuit such as the lighting circuit 222 turns on the lamp when the duty ratio of the input PWM signal reaches the predetermined value, and brightens the lamp according to the increase in the duty ratio, but the present invention is not limited thereto.

For example, the lighting circuit may be a circuit that turns on a lamp when the level of input DC voltage reaches a predetermined value and brightens the lamp according to the increase in the level. Here, the lighting circuits X1 for turning on the lamps 12, 22 and the lighting circuit X2 for turning on the accessory lamp L3 may be different from each other in an operating condition.

For example, the lighting circuit X1 turns on the lamp 12 when the DC voltage level reaches 0.6 V, and sets the lamp 12 to the predetermined brightness A0 when the DC voltage level reaches 3.0 V The lighting circuit X2 turns on the accessory lamp L3 when the DC voltage level reaches 0.8 V, and sets the accessory lamp L3 to the predetermined brightness A0 when the DC voltage level reaches 3.5 V

In such a case, for example, if the microcomputer 230 outputs the DC voltage changing from 0.6 V to 3.0 V to the lighting circuit X1 and outputs the DC voltage changing from 0.8 V to 3.5 V to the lighting circuit X2 in the period Ta based on the instruction signal SI, effects similar to those of the present embodiment can be obtained.

<Setting of current value>

For example, the lighting circuit 233 may be a circuit capable of setting a current value (i.e., current value to the lamp 12 when the duty ratio D of the signal S1 is 30%), which can be supplied to the lamp 12 by the lighting circuit 233, based on the duty ratio of the PWM signal different from that of the signal S1.

Note that even if the lighting circuit 233 is such a circuit, it is necessary to input the signal S1 having a duty ratio D of the predetermined value Da or more to the lighting circuit 233 in order to turn on the lamp 12.

=== Summary ===

The vehicle lamp 100 of the present embodiment has been described above. For example, the lighting circuit 233 and lighting circuit 222 of the lighting device 210 of Fig. 3 are different from each other in an operating condition for turning on the lamp. However, when turning on the lamp 12 and the accessory lamp L3, the microcomputer 230 of the present embodiment generates the signals Sa, Sb enabling both the two lighting circuits 222, 233 to turn on the target lamps. Thus, in the present embodiment, it is possible to suppress the deviation in the timing of turning on the lamp 12 and the accessory lamp L3.

The lighting circuit 233 performs PWM lighting of the accessory lamp L3, and the lighting circuit 222 performs PWM lighting of the lamp 12. Note that the lighting circuits 222, 233 may turn on the target lamps according to the level of the input DC voltage, for example.

The lighting circuit 233 can gradually turn on the accessory lamp L3 according to the duty ratio of the signal S1, and the lighting circuit 222 can gradually turn on the lamp 12 according to the duty ratio of the signal S2.

The microcomputer 230 also generates the signals Sa, Sb such that the brightnesses of the lamp 12 and the accessory lamp L3 reach the predetermined brightness A1 in the predetermined period Ta (see Fig. 7) after the lamp 12 and the accessory lamp L3 have been turned on. As a result, in the present embodiment, the change in brightness of the lamp 12 can be made substantially equal to the change in brightness of the accessory lamp L3. Thus, even in the period in which the brightness of each of the lamp 12 and the accessory lamp L3 changes, it is possible to suppress deviation in brightness between the lamp 12 and the accessory lamp L3.

The lighting device 210 is provided with the light emitting module 221 that turns on the lamp 22. Thus, in the present embodiment, it is possible to suppress the deviation in the timing of turning on the lamps 12, 22 and the accessory lamp L3.

As illustrated in Fig. 1, the accessory lamp L3 is disposed between the left lamp 12 and the right lamp 22 at the front of the vehicle C. In the present embodiment, it is possible to suppress deviation between the timing of turning on the accessory lamp L3 adjacent to the lamps 12, 22 and the timing of turning on the lamps 12, 22.

The microcomputer 230 gradually turns on the lamp 12 and the accessory lamp L3, for example, when the keyless etc. are operated to unlock the door of the vehicle C. Thus, the user of the vehicle C can safely access the vehicle C particularly during night.

The above-described embodiments are for the sake of easy understanding of the present invention, and are not intended to limit the present invention. In addition, the present invention can be changed or modified without departing from the gist thereof, and the present invention includes equivalents thereof, needless to say.

The present international application claims priority based on Japanese Patent Application No.2022-080878 filed on May 17, 2022, and the entire contents of Japanese Patent Application No. 2022-080878 are incorporated herein by reference.

The description of the specific embodiments of the present invention is presented for the purpose of illustration. The specific embodiments are not intended to be exhaustive or to limit the invention as it is in the form described. It is obvious to those skilled in the art that many modifications and alterations are possible in light of the contents of the description above.

LIST OF REFERENCE SIGNS

| | |
|---|---|
| 10 to 12, 20 to 22 | Lamp |
| 100 | Vehicle lamp |
| 110 | Control device |
| 200 | ECU |
| 210 | Lighting device |
| 220, 221 | Light emitting module |
| 222, 233, 242 | Lighting circuit |
| 230, 240 | Microcomputer |
| 231, 232, 241 | IF circuit |

| 300 | Control unit |
| 310, 311 | Transistor |
| 320, 321 | Terminal |
| 500, 510 | Resistor |
| Buffer 501, 511 | Vehicle |
| C | Headlamp |
| L1, L2 | Accessory lamp |
| L3 | |

**Claims**

1. A lighting device comprising:

a first lighting circuit that turns on a first light source when a state of a first signal satisfies a first condition and changes a brightness of the first light source according to the state of the first signal;
a second lighting circuit that turns on a second light source when a state of a second signal satisfies a second condition different from the first condition and changes a brightness of the second light source according to the state of the second signal; and
a first output circuit that outputs, to the first lighting circuit, the first signal whose state changes from a first initial state satisfying the first condition such that the first light source is turned on and is gradually brightened, and outputs, to the second lighting circuit, the second signal whose state changes from a second initial state satisfying the second condition such that the second light source is turned on and is gradually brightened, based on an instruction signal.

2. The lighting device according to claim 1, wherein

the first lighting circuit performs PWM lighting of the first light source, and
the second lighting circuit performs PWM lighting of the second light source.

3. The lighting device according to claim 2, wherein

the first output circuit
outputs, as the first signal, a first PWM signal whose first duty ratio changes from a first initial value satisfying the first condition, and outputs, as the second signal, a second PWM signal whose second duty ratio changes from a second initial value satisfying the second condition, based on the instruction signal,
the first lighting circuit
performs the PWM lighting of the first light source in synchronization with the first PWM signal, and changes the brightness of the first light source according to the first duty ratio of the first PWM signal, and

the second lighting circuit
performs the PWM lighting of the second light source in synchronization with the second PWM signal, and changes the brightness of the second light source according to the second duty ratio of the second PWM signal.

4. The lighting device according to claim 3, wherein

the first output circuit
changes the first duty ratio and the second duty ratio such that the brightness of each of the first light source and the second light source reaches a predetermined brightness in a predetermined period after each of the first light source and the second light source has been turned on.

5. The lighting device according to any one of claims 1 to 4, further comprising:

a third lighting circuit that turns on a third light source when a state of a third signal satisfies a third condition and changes a brightness of the third light source according to the state of the third signal; and
a second output circuit that outputs, to the third lighting circuit, the third signal whose state changes from a third initial state satisfying the third condition such that the third light source is turned on and is gradually brightened based on the instruction signal.

6. A vehicle lamp comprising:

the lighting device according to claim 5; and
the first to third light sources arranged at a front of the vehicle,
wherein the second light source is disposed between the first light source and the third light source.

7. A lighting device for turning on a first light source and a second light source attached to a vehicle, comprising:

a first lighting circuit that turns on the first light source when a state of a first signal satisfies a first condition and changes a brightness of the first light source according to the state of the first signal;
a second lighting circuit that turns on the second light source when a state of a second signal satisfies a second condition different from the first condition and changes a brightness of the second light source according to the state of the second signal; and
a first output circuit that outputs, to the first lighting circuit, the first signal whose state changes from a first initial state satisfying the first condition such that the first light source is turned on and is gradually brightened, and outputs, to the second lighting circuit, the second signal whose state changes from a second initial state satisfying the second condition such that the second light source is turned on and is gradually brightened, when a door of the vehicle is unlocked.

# FIG. 1

# FIG. 2

# FIG. 3

## FIG. 4

SI

MICROCOMPUTER 230

CONTROL UNIT 300

310

311

Sa 320

Sb 321

IF CIRCUIT 231

Vdd

500

501

S1

IF CIRCUIT 232

Vdd

510

511

S2

LIGHTING CIRCUIT 233

LIGHTING CIRCUIT 222

EP 4 529 359 A1

# FIG. 5

Vdd (H)

S1
(Sa)

0 (L)

T1

T2

T0

T0

T0

# FIG. 6

S10

START

S20

RECEIVE OPERATION RESULT INDICATING UNLOCKING OF DOOR OF VEHICLE C

S21

OUTPUT INSTRUCTION SIGNAL SI TO LIGHT EMITTING MODULES 220, 221

S22

GENERATE SIGNALS Sa, Sb BY MICROCOMPUTER 230, AND GENERATE SIGNAL Sc BY MICROCOMPUTER 240

S23

CHANGE DUTY RATIOS OF SIGNALS Sa TO Sc BY MICROCOMPUTERS 230, 240 SUCH THAT LAMPS REACH PREDETERMINED BRIGHTNESS

S24

PREDETERMINED PERIOD Tb ELAPSED?      No

Yes

END

## FIG. 7

## INTERNATIONAL SEARCH REPORT

| | International application No. |
|---|---|
| | **PCT/JP2023/017120** |

### A. CLASSIFICATION OF SUBJECT MATTER

**H05B 47/165**(2020.01)i; **B60Q 1/28**(2006.01)i; **B60Q 1/50**(2006.01)i; **H05B 45/10**(2020.01)i; **H05B 45/325**(2020.01)i; **H05B 47/105**(2020.01)i

FI: H05B47/165; B60Q1/28; B60Q1/50 Z; H05B45/10; H05B45/325; H05B47/105

According to International Patent Classification (IPC) or to both national classification and IPC

### B. FIELDS SEARCHED

Minimum documentation searched (classification system followed by classification symbols)

B60Q 1/00-1/56, H05B 39/00-39/10, 45/00-45/58, 47/00-47/29, F21K 9/00-9/90, F21S 2/00-45/70

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2014-175212 A (KONICA MINOLTA INC) 22 September 2014 (2014-09-22) paragraphs [0026], [0029], [0040]-[0041], [0044]-[0045], [0048]-[0049], [0054], fig. 3, 5, 8, 10 | 1-5 |
| A | | 6-7 |
| A | JP 2001-93693 A (MATSUSHITA ELECTRIC WORKS LTD) 06 April 2001 (2001-04-06) entire text, all drawings | 1-7 |
| A | JP 5-109490 A (FUJITSU TEN LTD) 30 April 1993 (1993-04-30) entire text, all drawings | 1-7 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 June 2023** | **27 June 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

INTERNATIONAL SEARCH REPORT
Information on patent family members

International application No.

**PCT/JP2023/017120**

| Patent document cited in search report | | | Publication date (day/month/year) | Patent family member(s) | Publication date (day/month/year) |
|---|---|---|---|---|---|
| JP | 2014-175212 | A | 22 September 2014 | (Family: none) | |
| JP | 2001-93693 | A | 06 April 2001 | (Family: none) | |
| JP | 5-109490 | A | 30 April 1993 | (Family: none) | |

Form PCT/ISA/210 (patent family annex) (January 2015)

**EP 4 529 359 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020055425 A
- JP 2022080878 A